# EUROPEAN PATENT SPECIFICATION

(11) **EP 2 652 985 B1**
(45) Date of publication and mention of the grant of the patent: **20.05.2015**
(21) Application number: 10860847.2
(22) Date of filing: 17.12.2010
(51) Int. Cl.: H04W 28/02, H04W 76/04

(54) **PERFORMANCE MONITORING IN A MOBILE COMMUNICATION NETWORK**
LEISTUNGSÜBERWACHUNG IN EINEM MOBILEN KOMMUNIKATIONSNETZ
SURVEILLANCE D'EFFICACITÉ DANS RÉSEAU DE COMMUNICATION MOBILE

(43) Date of publication of application: 23.10.2013
(73) Proprietor: Telefonaktiebolaget L M Ericsson (PUBL), 164 83 Stockholm (SE)
(72) Inventor: WÄNSTEDT, Stefan, S-972 51 Luleå (SE); ENSTRÖM, Daniel, S-954 33 Gammelstad (SE)
(74) Representative: Ahlstrand, Mal-Sook Susanne Maria
(86) International application number: PCT/SE2010/051407
(87) International publication number: WO 2012/082036

(56) References cited:
- EP-A1- 2 028 798
- EP-A1- 2 106 068
- US-A1- 2004 052 212
- US-A1- 2004 052 212
- US-A1- 2010 142 539
- US-B1- 7 493 383
- NETWORK WORKING GROUP ET AL. PERFORMANCE EVALUATION OF EXPLICIT CONGESTION NOTIFICATION (ECN) IN IP NETWORKS July 2000,

## Description

### Technical Field

The embodiments of the present invention relate to performance monitoring in a mobile communication network, an in particular to performance monitoring relating to congestion.

### Technical Background

Performance monitoring is required in mobile communication networks. However, the network operators have various needs to be able to secure that their respective network delivers an acceptable quality to the subscribers. Performance monitoring can be done in many ways going to various depths when it comes to the granularity of the performance monitoring information. One category of metrics used for the performance monitoring is service agnostic metrics traditionally associated with a connectivity delivery such as generic mobile, or fixed broadband. These metrics include e.g. packet loss data, bandwidth throughput, latency, but they can also include node uptime/downtime, link utilization; i.e. aggregated measures.

In a mobile communication network, there is a wealth of performance monitoring data available. Naturally, all measures on the Internet Protocol (IP) layer available in a fixed broadband network are also available for the wireless packet switched (PS) transported traffic, but added to this, it is also possible to have access to radio access related performance metrics such as cell load level, power consumption, scheduler information, queue times, and various mobility measures.

Hence, when doing performance monitoring in a mobile network for PS traffic, the combined information from radio access measurements and IP layer measurements can give a wealth of information from which service performance and network utilization can be deduced.

If the performance measurements are restricted to performance measurements on the IP layer only the amount of information available is significantly reduced. I.e. the access related possible measurements that can be transported using dedicated protocols/interfaces are stripped away.

Regarding performance monitoring in relation to congestion, determining levels of congestion becomes possible only using queue time measurements on the particular node and very little can be told about the level of congestion in other nodes.

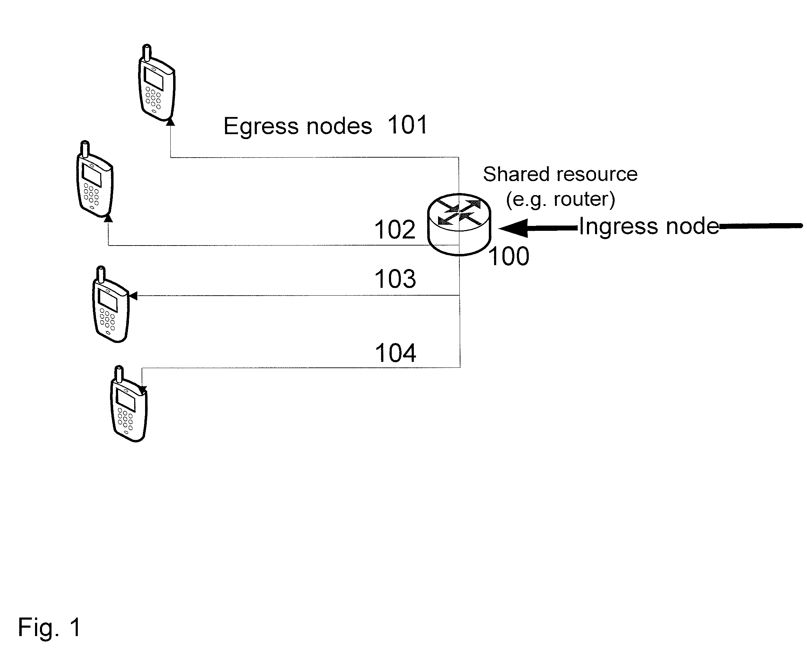

It is a well-known fact that PS networks utilizing shared resources between the users can experience congestion. Congestion will happen when the sum of traffic of the ingress nodes, i.e. the entry points, of the shared resource exceeds the sum of the traffic of the egress nodes, i.e. the exit points, of the same shared resource. The most typical example is a router 100 with a specific number of connections 101, 102, 103, 104 as illustrated in **figure** 1. Even if the router has processing power enough to re-route the traffic according to the link throughput, the current available link throughput might restrict the amount of traffic the outgoing links from the router can cope with. Hence, the buffers of the router will build up and eventually overflow. The network now experiences congestion and the router is forced to drop packets.

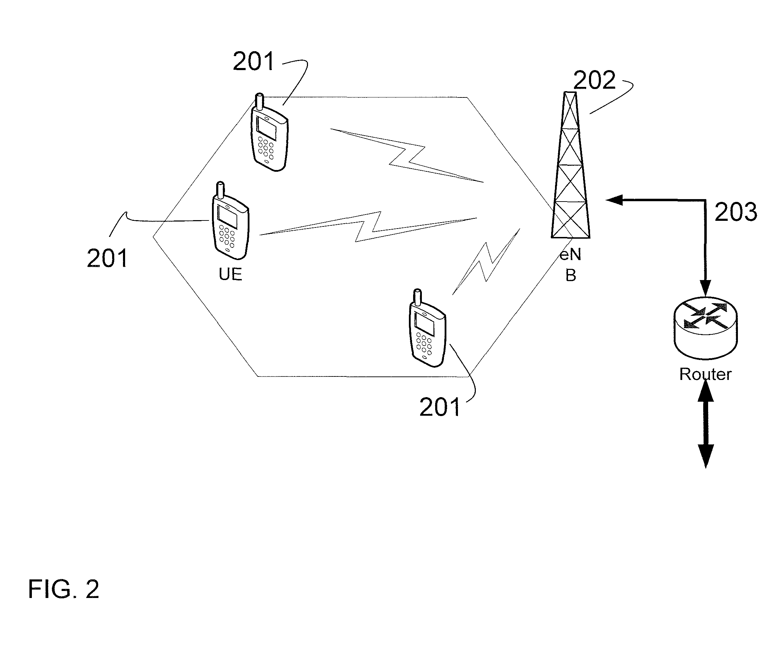

Another example of congestion can be found when studying wireless networks with shared channels such as wireless LAN (IEEE 802.11 a/b/g), or mobile networks such as Highspeed packet access (HSPA), Long-term Evolution (LTE) and WiMAX. An LTE network is schematically illustrated in **figure 2** comprising User Equipments (UEs) 201 wirelessly connected to eNodeBs (eNBs) 202, having an IP (Internet Protocol) based transport network 203. In these wireless networks, at least the downlink is shared between the users and is by that a possible candidate to experience congestion. In e.g. the case of LTE, the base station, also referred to as eNodeB B (eNB), will manage re-transmissions on the Media Access Control (MAC) layer to the mobile terminal, also referred to as user equipment (UE) which will have impact on the amount of traffic that the eNB at any given moment can provide throughput for. The more re-transmissions required for successful reception at the UE, the less available power for providing throughput for other users.

A normal behavior for any routing node is to provide buffers that can manage a certain amount of variation in input/output link capacity and hence absorb minor congestion occurrences. However, when the congestion is severe enough, the routing node will eventually drop packets. For Transmission Control Protocol (TCP) traffic, a dropped packet will be detected by the sender since no acknowledgement (ACK) is received for that particular packet and a re-transmission will occur. Further, the TCP protocol has a built in rate adaptive feature which will lower the transmission bit-rate when packet losses occur and re-transmissions happen on the IP layer. Hence, TCP is well suited to respond to network congestion.

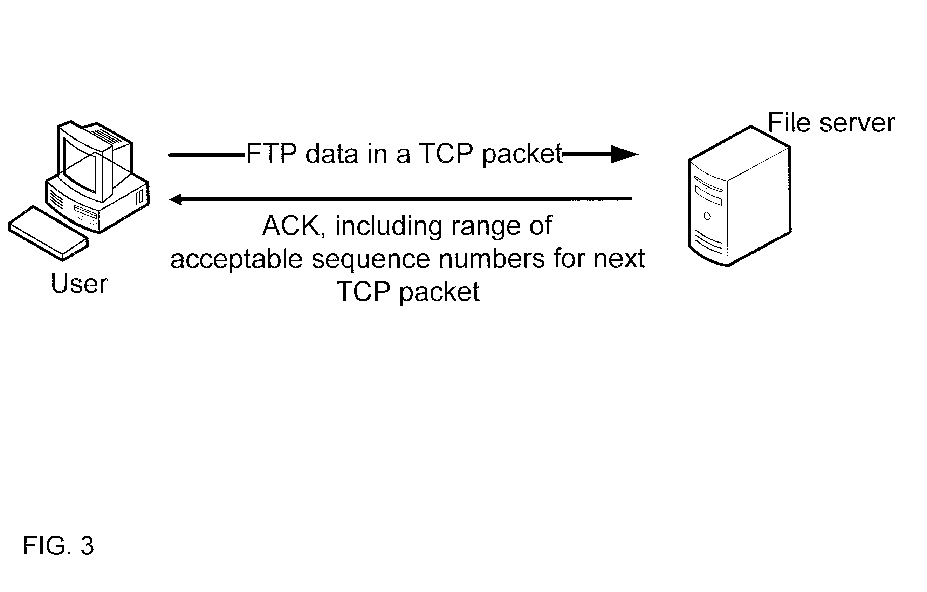

A typical example where TCP is used is in file transfer e.g. using the file transfer protocol (FTP) as illustrated in figure 3. The actual transfer of the file from one location to another is done in a reliable way, since each TCP packet, containing a piece of the file, is acknowledged by the receiver. If the acknowledgement is not received within a specific time-out interval, the data is retransmitted. The TCP retransmission time-out value is dynamically determined for each connection, based on round-trip time. At the receiver, sequence numbers are used to correctly order segments that may be received out of order and to eliminate duplicates. TCP governs the amount of data sent by returning a window with every acknowledgement to indicate a range of acceptable sequence numbers beyond the last segment successfully received. The window indicates an allowed number of octets that the sender may transmit before receiving further permission. Since this flow control is built into the protocol itself, TCP provides a rate adaptive feature independent of whatever application that uses it.

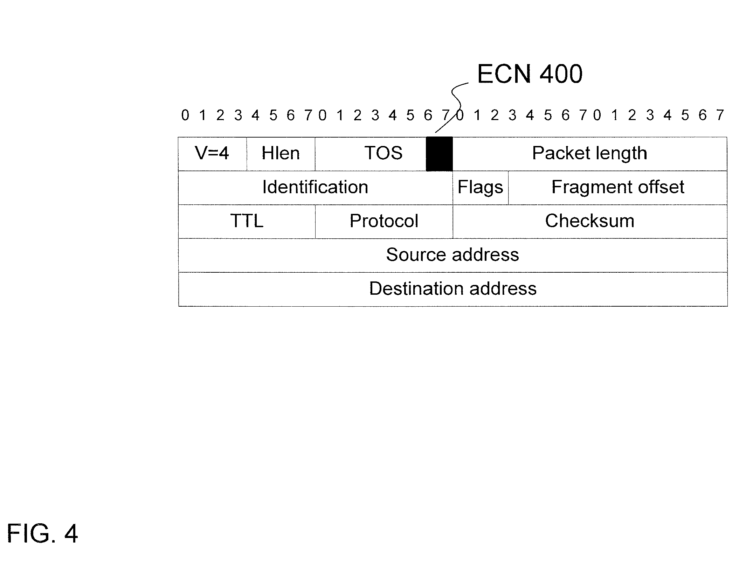

To further increase the performance of routing nodes, a scheme called "Explicit Congestion Notification (ECN) for IP" has been developed in IETF RFC 3168. This scheme utilizes two bits 400 in the IP header to signal the risk for congestion-related losses as shown in **figure 4****.** The field has four code points where two are used to signal ECN capability and the other two are used to signal congestion. The code point for congestion is set in e.g. routers and when the receiver has encountered a congestion notification it propagates the information to the sender of the stream which then can adopt its transmission bit-rate. For TCP, this is done by using two, previously reserved, bits in the TCP header. When received, these bits trigger the sender to reduce its transmission bit-rate.

With the introduction of LTE, a new, simplified radio access network (RAN) architecture is introduced. Simply put, the main parts of the radio network controller (RNC) of 3G networks and the NodeB from the UTRAN architecture was brought together into one node, the eNodeB (eNB). This means that from a performance monitoring point-of-view, there is no node in LTE similar to the RNC where a significant amount of measuring data could be assembled.

**Figure 2** illustrates as described above schematically the LTE architecture.

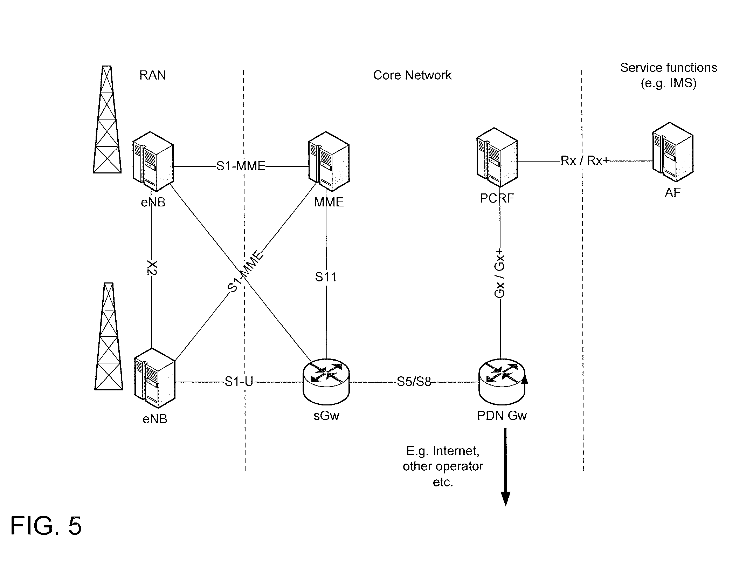

This means that in order to do performance monitoring in an effective way, it is needed to use some other node which aggregates traffic. Looking at **figure 5****,** it can be seen that the Serving gateway (sGw) would be a suitable candidate to do this in a LTE network. The sGw has access to the user plane data (i.e. the IP traffic) tunneled over GTP-U (GPRS Tunneling Protocol-Userplane) on the S1-U (S1-Userplane) interface (between the eNB and the sGw) so all normal router monitoring functions apply. The S11 interface is mainly used for bearer management, i.e. no radio specific data is sent over this link. The S1-U interface is similar in the sense that it does not either transmit any radio related measurements. However, the only performance monitoring functions available in the sGw is the traditional IP layer measurements.

US 7606159 B2 shows a method and apparatus for updating best path based on real-time congestion feedback. It specifies monitoring of real-time congestion information and as a result, it updates routing paths to avoid further congestion.

US 7 493 383 B1 relates to a TCP communication method by establishing a plurality of tunneled network connections between network devices. The network devices employ one of the tunneled network connections to establish a plurality of application sessions. If congestion is detected in one of the tunneled network connections, the application sessions are transferred without interrupting to another tunneled network connection.

US 2004/052212 A1 relates to a method of managing communications in a wireless communication network by communicating, between a wireless network controller and a packet gateway, an indication of congestion in network resources. The communication of data between the wireless network controller and the packet gateway is adjusted based on the communicated indication.

### Summary

It is desired to further enhance the performance monitoring possibilities in LTE/ SAE (System Architecture Evolution) in an effective way going beyond traditional IP layer measurements.

Thus according to a first aspect of embodiments of the present invention a method performed by a network node of a wireless communication network for detecting uplink congestion is provided. The wireless communication network is configured for packet transmission by establishing tunnels between nodes of the wireless communication network. Packets detected to experience uplink congestion comprise a marker which is inserted by a base station of the wireless communication network. The method comprises receiving a packet from a user equipment via a base station. The method further comprises analyzing the packet to detect information of the packet and if the packet comprises a marker indicating uplink congestion. If said marker is detected, the method further comprises extracting ingress Internet Protocol, IP, number of the tunnel used for said packet. The method further comprises sending information of the marked packet and the extracted ingress IP number of the tunnel used for said packet to a performance monitoring node configured to identify at which base station of the wireless communication network uplink congestion has occurred and to collect and store identity information of any base station in the wireless communication network where uplink congestion has occurred.

According to a second aspect of embodiments of the present invention a method performed by a performance monitoring node of a wireless communication network for detecting uplink congestion is provided. The wireless communication network is configured for packet transmission by establishing tunnels between nodes of the wireless communication network. Packets detected to experience uplink congestion comprise a marker which is inserted by a base station of the wireless communication network. The performance monitoring node is configured to identify at which base station of the wireless communication network uplink congestion has occurred and to collect and store identity information of any base stations in the wireless communication network where uplink congestion has occurred. The method comprises receiving information of a packet which is detected to comprise a marker indicating that it has experienced uplink congestion and an ingress IP number of the tunnel used for said packet. The method further comprises looking up the ingress IP number of the tunnel used for said packet to identify the base station that has inserted the marker into said packet. The method further comprises storing identity information of the base station and information of the packet.

According to a third aspect of embodiments of the present invention a network node of a wireless communication network for detecting uplink congestion is provided. The wireless communication network is configured for packet transmission by establishing tunnels between nodes of the wireless communication network and packets detected to experience uplink congestion comprise a marker which is inserted by a base station of the wireless communication network. The network node comprises an input/output unit configured to receive a packet from a user equipment via a base station. The network node further comprises a processor configured to analyze the packet to detect information of the packet. The network node further comprises the processor configured to extract ingress Internet Protocol, IP, number of the tunnel used for said packet. The input/output unit is further configured to send information of the marked packet and the extracted ingress IP number of the tunnel used for said packet to a performance monitoring node configured to identify at which base station of the wireless communication network uplink congestion has occurred and to collect and store identity information of any base station performance occurred.

According to a fourth aspect of embodiments of the present invention a performance monitoring node of a wireless communication network for detecting uplink congestion is provided. The wireless communication network is configured for packet transmission by establishing tunnels between nodes of the wireless communication network. Packets detected to experience uplink congestion comprise a marker which is inserted by a base station of the wireless communication network. The performance monitoring node is configured to identify at which base station of the wireless communication network uplink congestion has occurred and to collect and store identity information of any base station in the wireless communication network where uplink congestion has occurred. The performance monitoring node further comprises an input unit configured to receive information of a packet which is detected to comprise a marker indicating that it has experienced uplink congestion and an ingress IP number of the tunnel used for said packet. The performance monitoring node further comprises a processor configured to look up the ingress IP number of the tunnel used for said packet to identify the base station that has inserted the marker into said packet. The performance monitoring node further comprises a memory configured to store identity information of the base station and information of the packet.

An advantage of the embodiments of the present invention is that is possible to get additional information related to performance monitoring in the sGw compared to current methods. The ECN CE bits have a one-to-one mapping to the congestion level on the uplink in the eNodeB. No other standardized means are available to achieve this kind of per flow information about congestion in each cell. One could imagine doing some implicit measurement based on packet jitter but that would have several drawbacks. The most obvious one is probably that measurement unit needs to be service aware knowing what packet rate to predict to enable a reliable jitter estimation tool translating into UL load. This is totally avoided basing the performance measurement on ECN since the ECN CE signal is directly sent by the eNodeB to indicate risk for packet losses, i.e. congestion.

A further advantage is that the embodiments of the present invention reduce uplink congestion, since the uplink is the limiting factor in an LTE network.

A yet further advantage of the embodiments of the present invention is that the network operator can obtain more detailed information about the cell load compared to pure IP layer monitoring.

### Brief Description of the Drawings

Figure 1 illustrates an example of ingress and egress nodes of a shared resource according to prior art.
Figure 2 illustrates a long-term evolution (LTE) network according to prior art.
Figure 3 illustrates an example when TCP is used for file transfer according to prior art.
Figure 4 illustrates an IP header with ECN bits in the TOS field according to prior art.
Figure 5 illustrates schematically the LTE architecture.
Figure 6 is a signalling scheme illustrating the method according to one embodiment of the present invention.
Figures 7-8 are flowcharts of the method according to embodiments of the present invention.
**Figure 9** illustrates schematically the network node exemplified by a sGW and a performance monitoring node according to embodiments of the present invention.

### Detailed Description

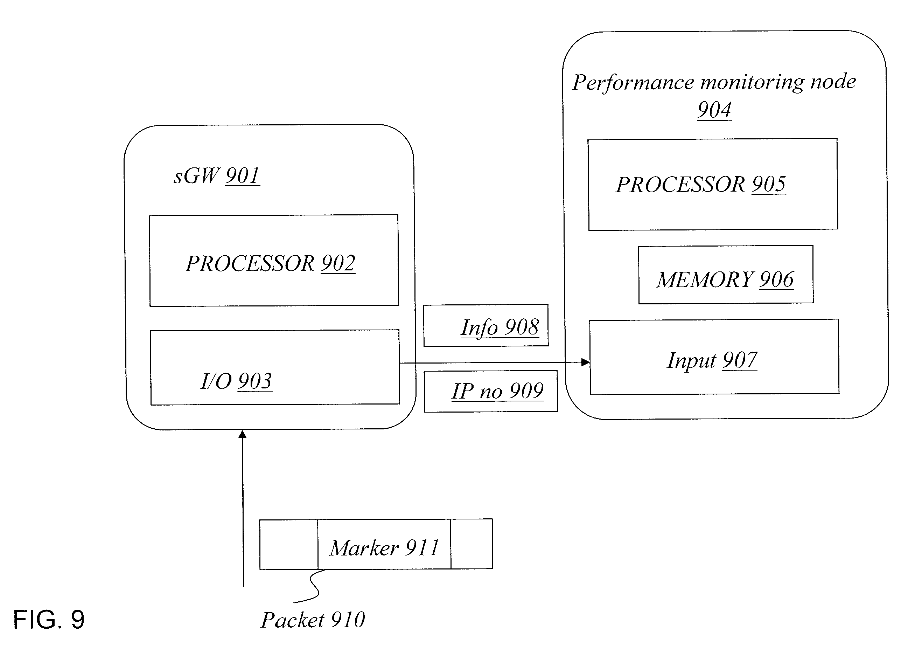

The present invention will be described more fully hereinafter with reference to the **Figure 9** illustrates schematically the network node exemplified by a sGW and a performance monitoring node according to embodiments of the present invention.

### Detailed Description

The present invention will be described more fully hereinafter with reference to the accompanying drawings, in which preferred embodiments of the invention are shown. The invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

Moreover, those skilled in the art will appreciate that the means and functions explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as a system comprising a computer processor and a memory coupled to the processor, wherein the memory is encoded with one or more programs that may perform the functions disclosed herein.

Embodiments of the present invention relate to a method and a network node such as a serving gateway (sGw) in a LTE network for detecting congestion. It should however be noted that the embodiments are not restricted to LTE and it could be any wireless network which is configured for packet transmission by establishing tunnels, e.g. according to GPRS Tunnelling Protocol (GTP), between nodes of the wireless communication network. Further, packets detected to experience congestion should also comprise any kind of a marker which is inserted by a base station of the wireless communication network.

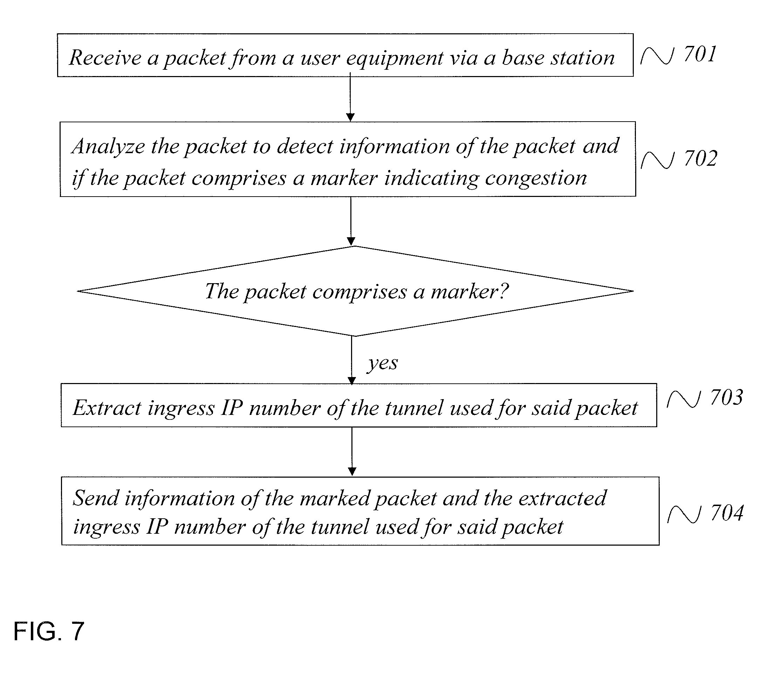

As illustrated in the flowchart of **figure 7** according to embodiments of the present invention, a packet from a user equipment via a base station is received 701 at the network node, and the packet is further analyzed 702 to detect if the packet comprises a marker indicating congestion.

If said marker is detected, ingress IP number of the tunnel used for said packet is extracted 703, and information of the marked packet and the extracted ingress IP number of the tunnel used for said packet is sent 704 to a performance monitoring node. In this way identity information of the base station that has inserted the marker into the packet can be extracted at the performance monitoring node. Thus, the position of the occurrence of the congestion can be detected at the performance monitoring node.

In addition to congestion, the marker may indicate one or more of the following parameters time stamp, packet size, and protocol information such that more detailed information of the congestion can be obtained at the performance monitoring node.

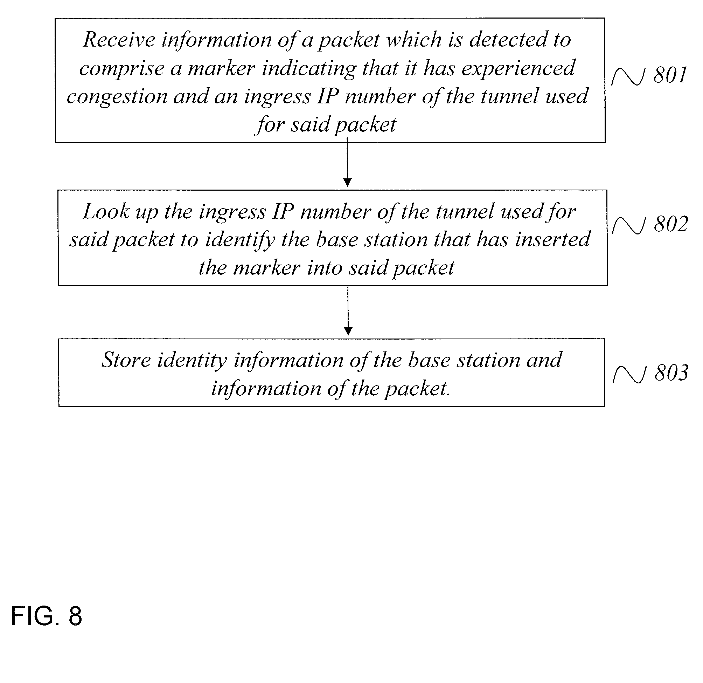

Accordingly a method and a performance monitoring node of a wireless communication network e.g. a LTE network for detecting congestion is provided by the embodiments. As mentioned above, the wireless communication network is configured for packet transmission by establishing tunnels between nodes of the wireless communication network, wherein packets detected to experience congestion comprises a marker which is inserted by a base station of the wireless communication network. As illustrated in the flowchart of **figure 8****,** the performance monitoring node receives 801 information of a packet which is detected to comprise a marker indicating that it has experienced congestion and an ingress IP number of the tunnel used for said packet. Then the performance monitoring node looks up 802 the ingress IP number of the tunnel used for said packet to identify the base station that has inserted the marker into said packet and stores identity information of the base station and information of the packet. The marker may be an ECN CE marker. The Operational System Support (OSS) collects data from the network to be able to trouble shoot and identify problems. The look up 802 of the ingress IP number of the tunnel can be supported by the OSS. However, the lookup can also be performed in other ways.

Hence the performance monitoring node is able to identify where and when the congestion has occurred according to embodiments of the present invention. Since this information is stored at the performance monitoring node, the network operator has access to a lot of information relating to congestion, which implies that the network operator can collect separate instances of congestion to obtain good overview. For example, the network operator may detect that a certain base station generates congestion markers at a certain point in time. The network operator can then increase the capacity at that position by e.g. adding an additional base station or change the antenna tilting. In this way, the network operator can improve the network. If the performance monitoring node would not have a collection of congestion data, the network operator may make wrong decisions based on a single congestion indication.

Moreover, the congestion information can also be used for self-organizing networks.

The embodiments of the present invention are further explained in the context of LTE below.

As stated above, 3GPP has adopted the use of the ECN bits for LTE in release 9, for end-to-end signaling. The ECN bits will be set by the eNodeB whenever there is risk for congestion either in the uplink or in the downlink. In the downlink case, the bits will only traverse the air interface between the eNodeB and the UE; hence they will never pass any node aggregating traffic from several cells. In the uplink case however, the bits will be set by the eNodeB receiving uplink traffic from an UE with the intent of letting the receiving UE know the there is risk for uplink congestion on the sender cell. These bits will traverse the sGw and can be interpreted as an uplink congestion warning from the originating eNodeB. According to embodiments of the present invention, this ECN information is combined with the destination IP address in the GTP-U packet sent between the eNodeB and the sGw, which results in that it is possible to detect and keep track of uplink congestion in all connected eNodeBs in one aggregated network node, i.e. the sGw.

The embodiments of the present invention rely on that the base stations are configured to insert markers indicating congestion in the uplink (UL) such as ECN markers. Advantages are that the embodiments do not rely on that the traffic generated by the UEs are tied to a specific service, neither do they rely on a proper UE response of the ECN messages.

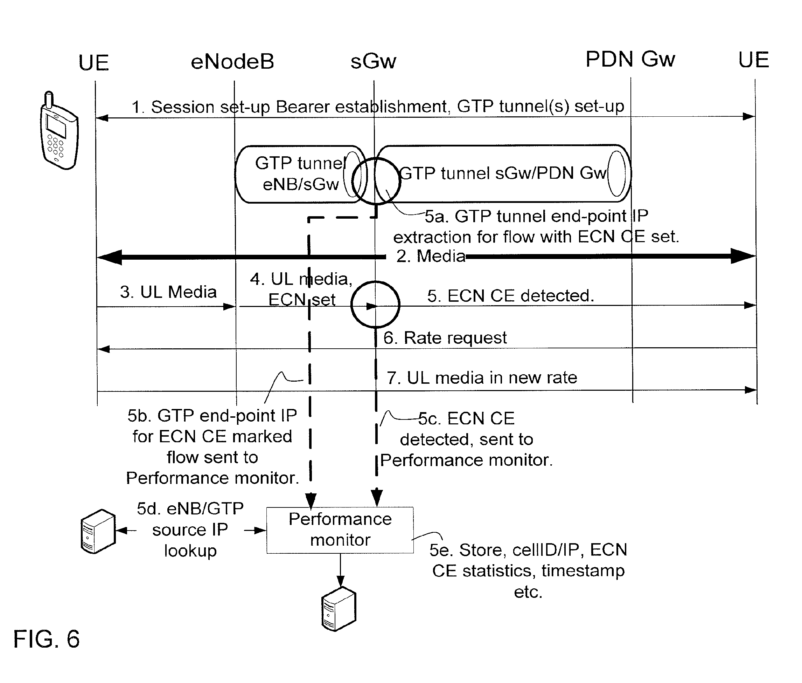

Further, the embodiments of the present invention may use a combination of two available protocols; the user plane data transported over S1-U using IP and the GTP protocol responsible for establishing a tunnel between the sGw and the eNodeB. This is illustrated in **figure 5****.** Turning now to **figure 6****,** which is a sequence diagram illustrating schematically an embodiment of the present invention.
1. In a first step a session is set up. This is a normal session set-up including EPS (Evolved Packet System) bearer establishment and application layer signalling to establish e.g. a VoIP (Voice over IP) call. This includes the establishment of GTP tunnels between all relevant nodes. For user plane data, tunnels are established between eNodeB - sGw and between sGw - PDN Gw. In this embodiment, all tunnels are established using the GTP-U protocol.
2. Media transmission can be started when the session set-up is completed. The media is transmitted according to the established session assuming no congestion.

In steps 3 and 4, the UL packet(s) are sent from the UE to the eNodeB. These packets are marked with ECN CE (Congestion Experienced) by the eNodeB B if congestion is detected. The actual marking can be triggered using various means but they are all related to some radio related measurement done in the eNodeB. The marked packets are then encapsulated in a GTP packet and forwarded to the sGw.
5. The sGw analyzes the received packets and is configured to detect a packet with the ECN CE bits set. It will then enter a reporting mode and trigger new signalling over the interface between the performance monitoring node and sGw.
5a. The sGw extracts the GTP tunnel ingress IP number e.g. the IP number of the eNodeB setting the ECN CE bits. The extraction may be supported by the OSS.
5b. The IP number extracted in 5a is sent over the interface to the performance monitoring node.
5c. The data of the marked ECN packet is sent over the interface to the performance monitoring node. This data may include a time stamp, packet size, protocol details (UDP/TCP) etc.
5d. The Performance monitoring node is configured to detect which eNodeB that has set the ECN CE bits. This is performed by a lookup of the GTP ingress IP.
5e. The performance monitoring node stores all the information from the event in a database. The information comprises at least information of the eNodeB B that has detected the congestion. The information may also comprise time stamp, packet size and additional protocol information.
6. Upon reception of the ECN CE bits, the receiving UE may send a rate reduction request to the transmitting UE whereby the transmitting UE starts to transmit at a lower rate.

By using the stored information in the performance monitoring node, the network operator can make changes in the network to reduce the congestion. Hence the network operator can detect that congestion occurs in a certain eNodeB B and also at a specific time of the day. Thus the network operator can take different actions to reduce the detected congestion by e.g. adding more eNodeBs, or in other ways increase the network capacity at that eNodeB B. In addition, the embodiments make it possible to identify radio congestion related to problems in the radio network and not only on the IP layer.

According to further aspects of the embodiments of the present invention a network node 901 of a wireless communication network for detecting congestion is provided as illustrated schematically in **figure 9****.** The wireless communication network is configured for packet transmission by establishing tunnels between nodes of the wireless communication network and packets detected to experience congestion comprises a marker 911 which is inserted by a base station of the wireless communication network. The network node comprises a an input/output unit 903 configured to receive a packet 910 from a user equipment via a base station, a processor 902 configured to analyze the packet to detect information of the packet 910. The processor 902 is configured to extract ingress IP number of the tunnel used for said packet, and wherein the input/output unit 903 is further configured to send information 908 of the marked packet and the extracted ingress IP number 909 of the tunnel used for said packet to a performance monitoring node such that identity information of the base station that has inserted the marker into the packet can be extracted at the performance monitoring node.

According to embodiments, the marker 911 is an ECN CE marker. The tunnel may be a tunnel set-up with GTP and the network node may be a sGW. In addition, the information of the marked packet may comprise at least one of a time stamp, packet size, and protocol information.

Furthermore, the performance monitoring node 904 of a wireless communication network for detecting congestion is also provided. The wireless communication network is configured for packet transmission by establishing tunnels between nodes of the wireless communication network and packets detected to experience congestion comprises a marker which is inserted by a base station of the wireless communication network. The performance monitoring node 904 comprises an input unit 907 configured to receive information of a packet 908 which is detected to comprise a marker 911 indicating that it has experienced congestion and an ingress IP number 909 of the tunnel used for said packet. The performance monitoring node further comprises a processor 905 configured to look up the ingress IP number of the tunnel used for said packet to identify the base station that has inserted the marker into said packet, and a memory 906 configured to store identity information of the base station and information of the packet.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method performed by a network node of a wireless communication network for detecting uplink congestion, wherein the wireless communication network is configured for packet transmission by establishing tunnels between nodes of the wireless communication network and packets detected to experience uplink congestion comprise a marker which is inserted by a base station of the wireless communication network, the method comprises:
- receiving (701) a packet from a user equipment via a base station,
- analyzing (702) the packet to detect information of the packet and if the packet comprises a marker indicating uplink congestion, and if said marker is detected,
- extracting (703) ingress Internet Protocol, IP, number of the tunnel used for said packet, and **characterized by**
- sending (704) information of the marked packet and the extracted ingress IP number of the tunnel used for said packet to a performance monitoring node configured to identify at which base station of the wireless communication network uplink congestion has occurred and to collect and store identity information of any base station in the wireless communication network where uplink congestion has occurred.

2. The method according to claim 1, wherein the marker is an Explicit Congestion Notification, ECN CE, marker.

3. The method according to any of claims 1-2, wherein the tunnel is a tunnel set-up with GPRS Tunnelling Protocol.

4. The method according to any of claims 1-3, wherein information of the marked packet comprises at least one of a time stamp, packet size, and protocol information.

5. The method according to any of claims 1-4, wherein the network node is a serving Gateway.

6. The method according to any of claims 1-5, wherein the wireless communication network is based on Long Term Evolution, LTE, network architecture.

7. A method performed by a performance monitoring node of a wireless communication network for detecting uplink congestion, wherein the wireless communication network is configured for packet transmission by establishing tunnels between nodes of the wireless communication network and packets detected to experience uplink congestion comprise a marker which is inserted by a base station of the wireless communication network, **characterized in that** the performance monitoring node is configured to identify at which base station of the wireless communication network uplink congestion has occurred and to collect and store identity information of any base stations in the wireless communication network where uplink congestion has occurred, the method comprises:
- receiving (801) information of a packet which is detected to comprise a marker indicating that it has experienced uplink congestion and an ingress IP number of the tunnel used for said packet,
- looking (802) up the ingress IP number of the tunnel used for said packet to identify the base station that has inserted the marker into said packet, and
- storing (803) identity information of the base station and information of the packet.

8. The method according to claim 7, wherein the marker is an ECN CE marker.

9. The method according to any of claims 7-8, wherein the tunnel is a tunnel set-up with GPRS Tunnelling Protocol.

10. The method according to any of claims 7-9, wherein information of the marked packet comprises at least one of a time stamp, packet size, and protocol information.

11. The method according to any of claims 7-10, wherein the wireless communication network is based on Long Term Evolution, LTE, network architecture.

12. A network node (901) of a wireless communication network for detecting uplink congestion, wherein the wireless communication network is configured for packet transmission by establishing tunnels between nodes of the wireless communication network and packets detected to experience uplink congestion comprise a marker which is inserted by a base station of the wireless communication network, the network node comprises an input/output unit (903) configured to receive a packet (910) from a user equipment via a base station, a processor (902) configured to analyze the packet to detect information of the packet (910), the processor (902) is configured to extract ingress Internet Protocol, IP, number of the tunnel used for said packet, and **characterized in that** the input/output unit (903) is further configured to send information (908) of the marked packet and the extracted ingress IP number (909) of the tunnel used for said packet to a performance monitoring node configured to identify at which base station of the wireless communication network uplink congestion has occurred and to collect and store identity information of any base station performance monitoring node in the wireless communication network where uplink congestion has occurred.

13. The network node according to claim 12, wherein the marker (911) is an ECN CE marker.

14. The network node according to any of claims 12-13, wherein the tunnel is a tunnel set-up with GPRS Tunnelling Protocol.

15. The network node according to any of claims 12-14, wherein information of the marked packet comprises at least one of a time stamp, packet size, and protocol information.

16. The network node according to any of claims 12-15, wherein the network node is a serving Gateway.

17. The network node according to any of claims 12-16, wherein the wireless communication network is based on Long Term Evolution, LTE, network architecture.

18. A performance monitoring node (904) of a wireless communication network for detecting uplink congestion, wherein the wireless communication network is configured for packet transmission by establishing tunnels between nodes of the wireless communication network and packets detected to experience uplink congestion comprise a marker which is inserted by a base station of the wireless communication network, **characterized in that** the performance monitoring node is configured to identify at which base station of the wireless communication network uplink congestion has occurred and to collect and store identity information of any base station in the wireless communication network where uplink congestion has occurred, the performance monitoring node (904) comprises an input unit (907) configured to receive information of a packet (908) which is detected to comprise a marker (911) indicating that it has experienced uplink congestion and an ingress IP number (909) of the tunnel used for said packet, a processor (905) configured to look up the ingress IP number of the tunnel used for said packet to identify the base station that has inserted the marker into said packet, and a memory (906) configured to store identity information of the base station and information of the packet.

19. The performance monitoring node according to claim 18, wherein the marker (911) is an ECN CE marker.

20. The performance monitoring node according to any of claims 18-19, wherein the tunnel is a tunnel set-up with GPRS Tunnelling Protocol.

21. The performance monitoring node according to any of claims 18-20, wherein information of the marked packet comprises at least one of a time stamp, packet size, and protocol information.

22. The performance monitoring node according to any of claims 18-21, wherein the wireless communication network is based on Long Term Evolution, LTE, network architecture.

## Patentansprüche

1. Verfahren, ausgeführt durch einen Netzknoten eines drahtlosen Kommunikationsnetzes, zur Ermittlung von Uplink-Überlastung, wobei das drahtlose Kommunikationsnetz durch den Aufbau von Tunneln zwischen Knoten des drahtlosen Kommunikationsnetzes für eine Paketübertragung konfiguriert ist und Pakete, die als von Uplink-Überlastung Betroffene ermittelt werden, eine Markierung aufweisen, die durch eine Basisstation des drahtlosen Kommunikationsnetzes eingefügt wird, wobei das Verfahren umfasst:
- Empfangen (701) eines Pakets von einer Benutzereinrichtung über eine Basisstation,
- Analysieren (702) des Pakets, um eine Information des Pakets zu ermitteln, und wenn das Paket eine Uplink-Überlastung anzeigende Markierung aufweist und wenn die Markierung ermittelt ist,
- Extrahieren (703) einer Eintritts-Internetprotokoll- bzw. IP-Nummer des Tunnels, der für das Paket verwendet wird, und **gekennzeichnet durch**
- Senden (704) der Information des markierten Pakets und der extrahierten Eintritts-IP-Nummer des Tunnels, der für das Paket verwendet wird, an einen Leistungsüberwachungsknoten, der dafür konfiguriert ist, zu erkennen, in welcher Basisstation des drahtlosen Kommunikationsnetzes Uplink-Überlastung aufgetreten ist, und Kennungsinformation jeder Basisstation im drahtlosen Kommunikationsnetz, wo Uplink-Überlastung aufgetreten ist, zu erfassen und zu speichern.

2. Verfahren nach Anspruch 1, wobei die Markierung eine Explicit Congestion Notification- bzw. ECN CE-Markierung ist.

3. Verfahren nach einem der Ansprüche 1 bis 2, wobei der Tunnel ein Tunnel ist, der mit einem GPRS-Tunnelungsprotokoll eingerichtet ist.

4. Verfahren nach einem der Ansprüche 1 bis 3, wobei die Information des markierten Pakets mindestens eines von Folgendem umfasst: einen Zeitstempel, Paketgröße und Protokollinformation.

5. Verfahren nach einem der Ansprüche 1 bis 4, wobei der Netzknoten ein Serving-Gateway ist.

6. Verfahren nach einem der Ansprüche 1 bis 5, wobei das drahtlose Kommunikationsnetz auf der Long Term Evolution- bzw. LTE-Netzarchitektur beruht.

7. Verfahren, ausgeführt durch einen Leistungsüberwachungsnetzknoten eines drahtlosen Kommunikationsnetzes, zur Ermittlung von Uplink-Überlastung, wobei das drahtlose Kommunikationsnetz durch Einrichtung von Tunneln zwischen Knoten des drahtlosen Kommunikationsnetzes für eine Paketübertragung konfiguriert ist und Pakete, die als von Uplink-Überlastung Betroffene ermittelt werden, eine Markierung aufweisen, die durch eine Basisstation des drahtlosen Kommunikationsnetzes eingefügt wird, **dadurch gekennzeichnet, dass** der Leistungsüberwachungsknoten dafür konfiguriert ist, zu erkennen, in welcher Basisstation des drahtlosen Kommunikationsnetzes Uplink-Überlastung aufgetreten ist, und Kennungsinformation jeglicher Basisstationen im drahtlosen Kommunikationsnetz, wo Uplink-Überlastung aufgetreten ist, zu erfassen und zu speichern, wobei das Verfahren umfasst:
- Empfangen (801) einer Information eines Pakets, die ermittlungsgemäß eine Markierung umfasst, die anzeigt, dass es von Uplink-Überlastung betroffen worden ist, und einer Eintritts-IP-Nummer des Tunnels, der für das Paket verwendet wird.
- Aufsuchen (802) der Eintritts-IP-Nummer des Tunnels, der für das Paket verwendet wird, um die Basisstation zu erkennen, die die Markierung in das Paket eingefügt hat, und
- Speichern (803) der Kennungsinformation der Basisstation und der Information des Pakets.

8. Verfahren nach Anspruch 7, wobei die Markierung eine ECN CE-Markierung ist.

9. Verfahren nach einem der Ansprüche 7 bis 8, wobei der Tunnel ein Tunnel ist, der mit einem GPRS-Tunnelungsprotokoll eingerichtet ist.

10. Verfahren nach einem der Ansprüche 7 bis 9, wobei die Information des markierten Pakets mindestens eines von Folgendem aufweist: einen Zeitstempel, Paketgröße und Protokollinformation.

11. Verfahren nach einem der Ansprüche 7 bis 10, wobei das drahtlose Kommunikationsnetz auf der Long Term Evolution- bzw. LTE-Netzarchitektur beruht.

12. Netzknoten (901) eines drahtlosen Kommunikationsnetzes zur Ermittlung von Uplink-Überlastung, wobei das drahtlose Kommunikationsnetz durch den Aufbau von Tunneln zwischen Knoten des drahtlosen Kommunikationsnetzes für eine Paketübertragung konfiguriert ist und Pakete, die als von Uplink-Überlastung Betroffene ermittelt werden, eine Markierung aufweisen, die durch eine Basisstation des drahtlosen Kommunikationsnetzes eingefügt ist, wobei der Netzknoten umfasst: eine Ein-/Ausgabeeinheit (903), die dafür konfiguriert ist, ein Paket (910) von einer Benutzereinrichtung über eine Basisstation zu empfangen, einen Prozessor (902), der dafür konfiguriert ist, das Paket zu analysieren, um die Information des Pakets (910) zu ermitteln, wobei der Prozessor (902) dafür konfiguriert ist, die Eintritts-Internetprotokpoll- bzw. IP-Nummer des Tunnels zu extrahieren, der für das Paket verwendet wird, und **dadurch gekennzeichnet, dass** die Ein-/Ausgabeeinheit (903) ferner dafür konfiguriert ist, die Information (908) des markierten Pakets und die extrahierte Eintritts-IP-Nummer (909) des Tunnels, der für das Paket verwendet wird, an einen Leistungsüberwachungsknoten zu senden, der dafür konfiguriert ist, zu erkennen, in welcher Basisstation des drahtlosen Kommunikationsnetzes Uplink-Überlastung aufgetreten ist, und Kennungsinformation jedes Leistungsüberwachungsknotens einer Basisstation im drahtlosen Kommunikationsnetz, wo Uplink-Überlastung aufgetreten ist, zu erfassen und zu speichern.

13. Netzknoten nach Anspruch 12, wobei die Markierung (911) eine ECN CE-Markierung ist.

14. Netzknoten nach einem der Ansprüche 12 bis 13, wobei der Tunnel ein Tunnel ist, der mit einem GPRS-Tunnelungsprotokoll eingerichtet ist.

15. Netzknoten nach einem der Ansprüche 12 bis 14, wobei die Information des markierten Pakets mindestens eines von Folgendem umfasst: ein Zeitstempel, Paketgröße und Protokollinformation.

16. Netzknoten nach einem der Ansprüche 12 bis 15, wobei der Netzknoten ein Serving-Gateway ist.

17. Netzknoten nach einem der Ansprüche 12 bis 16, wobei das drahtlose Kommunikationsnetz auf der Long Term Evolution- bzw. LTE-Netzarchitektur beruht.

18. Leistungsüberwachungsknoten (904) eines drahtlosen Kommunikationsnetzes zur Ermittlung von Uplink-Überlastung, wobei das drahtlose Kommunikationsnetz durch den Aufbau von Tunneln zwischen Knoten des drahtlosen Kommunikationsnetzes für eine Paketübertragung konfiguriert ist und Pakete, die als von Uplink-Überlastung Betroffene ermittelt werden, eine Markierung aufweisen, die durch eine Basisstation des drahtlosen Kommunikationsnetzes eingefügt wird, **dadurch gekennzeichnet, dass** der Leistungsüberwachungsknoten dafür konfiguriert ist, zu erkennen, in welcher Basisstation des drahtlosen Kommunikationsnetzes Uplink-Überlastung aufgetreten ist, und Kennungsinformation jeder Basisstation im drahtlosen Kommunikationsnetz, wo Uplink-Überlastung aufgetreten ist, zu erfassen und zu speichern, wobei der Leistungsüberwachungsknoten (904) umfasst: eine Eingabeeinheit (907), die dafür konfiguriert ist, die Information eines Pakets (908), das ermittlungsgemäß eine Markierung (911) umfasst, die anzeigt, dass es von Uplink-Überlastung betroffen worden ist, und eine Eintritts-IP-Nummer (909) des Tunnels zu empfangen, der für das Paket verwendet wird, einen Prozessor (905), der dafür konfiguriert ist, die Eintritts-IP-Nummer des Tunnels aufzusuchen, der für das Paket verwendet wird, um die Basisstation zu erkennen, die die Markierung in das Paket eingefügt hat, und einen Speicher (906), der dafür konfiguriert ist, Kennungsinformation der Basisstation und Information des Pakets zu speichern.

19. Leistungsüberwachungsknoten nach Anspruch 18, wobei die Markierung (911) eine ECN CE-Markierung ist.

20. Leistungsüberwachungsknoten nach einem der Ansprüche 18 bis 19, wobei der Tunnel ein Tunnel ist, der mit einem GPRS-Tunnelungsprotokoll eingerichtet ist.

21. Leistungsüberwachungsknoten nach einem der Ansprüche 18 bis 20, wobei die Information des markierten Pakets mindestens eines von Folgendem aufweist: einen Zeitstempel, Paketgröße und Protokollinformation.

22. Leistungsüberwachungsknoten nach einem der Ansprüche 18 bis 21, wobei das drahtlose Kommunikationsnetz auf der Long Term Evolution- bzw. LTE-Netzarchitektur beruht.

## Revendications

1. Procédé mis en oeuvre par un noeud de réseau d'un réseau de communication sans fil pour détecter un encombrement de liaison montante, dans lequel le réseau de communication sans fil est configuré en vue d'une transmission de paquets en établissant des tunnels entre des noeuds du réseau de communication sans fil, et dans lequel des paquets détectés comme subissant un encombrement de liaison montante comprennent un marqueur qui est inséré par une station de base du réseau de communication sans fil, le procédé comprend les étapes ci-dessous consistant à :
- recevoir (701) un paquet en provenance d'un équipement d'utilisateur par l'intermédiaire d'une station de base ;
- analyser (702) le paquet en vue de détecter des informations du paquet et si le paquet comprend un marqueur indiquant un encombrement de liaison montante, et que ledit marqueur est détecté ;
- extraire (703) un numéro de protocole Internet, IP, d'entrée du tunnel utilisé pour ledit paquet, et **caractérisé par** l'étape consistant à :
- envoyer (704) des informations du paquet marqué et le numéro de protocole IP d'entrée extrait du tunnel utilisé pour ledit paquet, à un noeud de surveillance de performances configuré de manière à identifier au niveau de quelle station de base du réseau de communication sans fil l'encombrement de liaison montante a été rencontré, et à collecter et stocker des informations d'identité d'une quelconque station de base dans le réseau de communication sans fil où un encombrement de liaison montante a été rencontré.

2. Procédé selon la revendication 1, dans lequel le marqueur est un marqueur de notification d'encombrement explicite, ECN CE.

3. Procédé selon l'une quelconque des revendications 1 à 2, dans lequel le tunnel est un tunnel établi avec un protocole de tunnellisation GPRS.

4. Procédé selon l'une quelconque des revendications 1 à 3, dans lequel les informations du paquet marqué comportent au moins l'une des informations parmi une estampille temporelle, une taille de paquet, et des informations de protocole.

5. Procédé selon l'une quelconque des revendications 1 à 4, dans lequel le noeud de réseau est une passerelle de desserte.

6. Procédé selon l'une quelconque des revendications 1 à 5, dans lequel le réseau de communication sans fil est basé sur une architecture de réseau de technologie d'évolution à long terme, LTE.

7. Procédé mis en oeuvre par un noeud de surveillance de performances d'un réseau de communication sans fil pour détecter un encombrement de liaison montante, dans lequel le réseau de communication sans fil est configuré en vue d'une transmission de paquets en établissant des tunnels entre des noeuds du réseau de communication sans fil, et dans lequel des paquets détectés comme subissant un encombrement de liaison montante comprennent un marqueur qui est inséré par une station de base du réseau de communication sans fil, **caractérisé en ce que** le noeud de surveillance de performances est configuré de manière à identifier au niveau de quelle station de base du réseau de communication sans fil l'encombrement de liaison montante a été rencontré, et à collecter et stocker des informations d'identité de stations de base quelconques dans le réseau de communication sans fil où un encombrement de liaison montante a été rencontré, le procédé comportant les étapes ci-dessous consistant à :
- recevoir (801) des informations d'un paquet qui est détecté comme comportant un marqueur indiquant qu'il a subi un encombrement de liaison montante, et un numéro de protocole IP d'entrée du tunnel utilisé pour ledit paquet ;
- consulter (802) le numéro de protocole IP d'entrée du tunnel utilisé pour ledit paquet en vue d'identifier la station de base qui a inséré le marqueur dans ledit paquet ; et
- stocker (803) des informations d'identité de la station de base et des informations du paquet.

8. Procédé selon la revendication 7, dans lequel le marqueur est un marqueur ECN CE.

9. Procédé selon l'une quelconque des revendications 7 à 8, dans lequel le tunnel est un tunnel établi avec un protocole de tunnellisation GPRS.

10. Procédé selon l'une quelconque des revendications 7 à 9, dans lequel les informations du paquet marqué comportent au moins l'une des informations parmi une estampille temporelle, une taille de paquet, et des informations de protocole.

11. Procédé selon l'une quelconque des revendications 7 à 10, dans lequel le réseau de communication sans fil est basé sur une architecture de réseau de technologie d'évolution à long terme, LTE.

12. Noeud de réseau (901) d'un réseau de communication sans fil pour détecter un encombrement de liaison montante, dans lequel le réseau de communication sans fil est configuré en vue d'une transmission de paquets en établissant des tunnels entre des noeuds du réseau de communication sans fil, et dans lequel des paquets détectés comme subissant un encombrement de liaison montante comprennent un marqueur qui est inséré par une station de base du réseau de communication sans fil, le noeud de réseau comportant une unité d'entrée/sortie (903) configurée de manière à recevoir un paquet (910) en provenance d'un équipement d'utilisateur par l'intermédiaire d'une station de base ; un processeur (902) configuré de manière à analyser le paquet en vue de détecter des informations du paquet (910), le processeur (902) étant configuré de manière à extraire un numéro de protocole Internet, IP, d'entrée du tunnel utilisé pour ledit paquet, et **caractérisé en ce que** l'unité d'entrée/sortie (903) est en outre configurée de manière à envoyer des informations (908) du paquet marqué et le numéro de protocole IP d'entrée extrait (909) du tunnel utilisé pour ledit paquet, à un noeud de surveillance de performances configuré de manière à identifier au niveau de quelle station de base du réseau de communication sans fil l'encombrement de liaison montante a été rencontré, et à collecter et stocker des informations d'identité d'un quelconque noeud de surveillance de performances de station de base dans le réseau de communication sans fil où un encombrement de liaison montante a été rencontré.

13. Noeud de réseau selon la revendication 12, dans lequel le marqueur (911) est un marqueur ECN CE.

14. Noeud de réseau selon l'une quelconque des revendications 12 à 13, dans lequel le tunnel est un tunnel établi avec un protocole de tunnellisation GPRS.

15. Noeud de réseau selon l'une quelconque des revendications 12 à 14, dans lequel les informations du paquet marqué comportent au moins l'une des informations parmi une estampille temporelle, une taille de paquet, et des informations de protocole.

16. Noeud de réseau selon l'une quelconque des revendications 12 à 15, dans lequel le noeud de réseau est une passerelle de desserte.

17. Noeud de réseau selon l'une quelconque des revendications 12 à 16, dans lequel le réseau de communication sans fil est basé sur une architecture de réseau de technologie d'évolution à long terme, LTE.

18. Noeud de surveillance de performances (904) d'un réseau de communication sans fil pour détecter un encombrement de liaison montante, dans lequel le réseau de communication sans fil est configuré en vue d'une transmission de paquets en établissant des tunnels entre des noeuds du réseau de communication sans fil, et dans lequel des paquets détectés comme subissant un encombrement de liaison montante comprennent un marqueur qui est inséré par une station de base du réseau de communication sans fil, **caractérisé en ce que** le noeud de surveillance de performances est configuré de manière à identifier au niveau de quelle station de base du réseau de communication sans fil l'encombrement de liaison montante a été rencontré, et à collecter et stocker des informations d'identité d'une quelconque station de base dans le réseau de communication sans fil où un encombrement de liaison montante a été rencontré, le noeud de surveillance de performances (904) comportant une unité d'entrée (907) configurée de manière à recevoir des informations d'un paquet (908) qui est détecté comme comportant un marqueur (911) indiquant qu'il a subi un encombrement de liaison montante, et un numéro de protocole IP d'entrée (909) du tunnel utilisé pour ledit paquet, un processeur (905) configuré de manière à consulter le numéro de protocole IP d'entrée du tunnel utilisé pour ledit paquet en vue d'identifier la station de base qui a inséré le marqueur dans ledit paquet, et une mémoire (906) configurée de manière à stocker des informations d'identité de la station de base et des informations du paquet.

19. Noeud de surveillance de performances selon la revendication 18, dans lequel le marqueur (911) est un marqueur ECN CE.

20. Noeud de surveillance de performances selon l'une quelconque des revendications 18 à 19, dans lequel le tunnel est un tunnel établi avec un protocole de tunnellisation GPRS.

21. Noeud de surveillance de performances selon l'une quelconque des revendications 18 à 20, dans lequel les informations du paquet marqué comportent au moins l'une des informations parmi une estampille temporelle, une taille de paquet, et des informations de protocole.

22. Noeud de surveillance de performances selon l'une quelconque des revendications 18 à 21, dans lequel le réseau de communication sans fil est basé sur une architecture de réseau de technologie d'évolution à long terme, LTE.
